# NEUE EUROPÄISCHE PATENTSCHRIFT

(11) **EP 3 830 945 B2**
(45) Veröffentlichungstag und Bekanntmachung des Hinweises auf die Entscheidung über den Einspruch: **18.06.2025**
(45) Hinweis auf die Patenterteilung: 07.09.2022
(21) Anmeldenummer: 19778868.0
(22) Anmeldetag: 17.09.2019
(51) Int. Cl.: H02P 3/18, H02P 29/032, H02P 6/24, H02J 9/00, H02P 29/028, H02P 29/024, H02P 29/00, B65G 43/00, B65G 23/24

(54) **GURTFÖRDEREINRICHTUNG SOWIE VERFAHREN ZUM ANHALTEN EINES GURTES EINER GURTFÖRDEREINRICHTUNG**
BELT CONVEYOR DEVICE AND METHOD FOR STOPPING A BELT OF A BELT CONVEYOR DEVICE
DISPOSITIF DE TRANSPORT À COURROIE AINSI QUE PROCÉDÉ D'ARRÊT D'UNE COURROIE D'UN DISPOSITIF DE TRANSPORT À COURROIE

(30) Priorität: 28.09.2018 EP 18197640
(43) Veröffentlichungstag der Anmeldung: 09.06.2021
(73) Patentinhaber: Innomotics GmbH, 90441 Nürnberg (DE)
(72) Erfinder: BECKER, Norbert, 91341 Röttenbach (DE); HELLMUTH, Torsten, 91058 Erlangen (DE)
(74) Vertreter: Michalski Hüttermann & Partner Patentanwälte mbB
(86) Internationale Anmeldenummer: PCT/EP2019/074820
(87) Internationale Veröffentlichungsnummer: WO 2020/064422

(56) Entgegenhaltungen:
- WO-A1-2013/020725
- CN-B- 103 950 702
- CN-U- 203 014 723
- DE-A1- 102011 085 387
- DE-A1- 19 943 663
- US-A1- 2017 313 522
- M. Z. BEBIC ET AL: "Speed Controlled Belt Conveyors: Drives and Mechanical Considerations", ADVANCES IN ELECTRICAL AND COMPUTER ENGINEERING, vol. 18, no. 1, 28 February 2018 (2018-02-28), RO, pages 51 - 60, XP055553052, ISSN: 1582-7445, DOI: 10.4316/AECE.2018.01007

## Beschreibung

Die Erfindung betrifft eine Gurtfördereinrichtung sowie ein Verfahren zum Anhalten einer Gurtantriebsrolle einer Gurtfördereinrichtung.

Gurtfördereinrichtungen dienen zum Transport von Schüttgut über lange Distanzen, insbesondere mehrerer Kilometer. Gurtfördereinrichtungen umfassen in der Regel einen Gurt, der von zumindest einer Gurtantriebsrolle angetrieben ist. Zum Antrieb der Gurtantriebsrolle dient ein Motor. In der Regel ist zwischen dem Motor und der Gurtantriebsrolle ein Getriebe zur Veränderung der Drehzahl und des Drehmoments positioniert. Seit einiger Zeit sind auch direkt-angetriebene Gurtfördereinrichtungen bekannt, die kein Getriebe zwischen dem Motor und der Gurtantriebsrolle aufweisen.

Bei einem Anhalten des Gurtes der Gurtfördereinrichtung auf Grund eines unvorhergesehenen Ereignisses führt eine hohe Trägheit des Schüttgutes zu einer nachteilhaften mechanischen Belastung des Gurtes.

Insbesondere bei einem Stromausfall oder einem ähnlichen Ereignis, welches zu einem Ausfall des Antriebs führt, drückt das sich bewegende Schüttgut aufgrund seiner Trägheit den Gurt weiter, während der Motor und die damit verbundene Gurtantriebsrolle bereits zum Stillstand gekommen sind.

Durch das die Trägheit des bewegten Massengutes und der fehlenden Drehung der Gurtantriebsrolle nimmt lokal die Gurtspannung ab. Dies führt zu einer nachteilhaften Stauchung des Gurtes bis hin zu einer Faltung des Gurtes.

Zur Verminderung der Belastung des Gurtes und zum Verhindern des Faltens des Gurtes erfolgt derzeit eine erhöhte Spannung des Gurtes. Eine erhöhte Spannung des Gurtes vermindert zwar die Gefahr einer Faltung des Gurtes, führt jedoch zu einer erhöhten Grundbelastung des Gurtes.

Das Dokument M. Z. BEBIC et al.: "Speed Controlled Belt Conveyors: Drives and Mechanical Considerations", ADVANCES IN ELECTRICAL AND COMPUTER ENGINEERING, Bd. 18, Nr. 1, 1. Januar 2018 (2018-01-01), Seiten 51-60, beschreibt eine Gurtfördereinrichtung mit variabler Fördergeschwindigkeit, bei welcher eine Referenzgeschwindigkeit zur Verbesserung der Energieeffizienz variiert wird. Motoren zum Antrieb der Gurtfördereinrichtung werden über einen Frequenzwandler versorgt, der einen Gleichrichter, einen Zwischenkreis und einen Spannungswandler umfasst. Im Zwischenkreis sind Kondensatoren zur Blindleistungskompensation angeordnet.

Das Dokument DE 10 2011 085 387 A1 beschreibt eine dynamoelektrische Maschine zum Antrieb einer PET-Streckblasmaschine, die zur Steigerung der Effizienz und Dynamik einen Stator, einen Rotor und an dem Rotor montierte Blasformen zur Aufnahme von PET-Vorformlingen umfasst.

Das Dokument DE 199 43 663 A1 beschreibt ein Verfahren zum Abbremsen eines frequenzumrichtergesteuerten Asynchronmotors, bei dem dieser mit einer Wechselspannung beaufschlagt wird, deren Frequenz kleiner als etwa die Hälfte der aktuellen Motordrehzahl ist.

Das Dokument WO 2013/020725 A1 beschreibt einen Stetigförderer mit einem Transportband, das zwischen einer Antriebsrolle und einer Umlenkrolle umläuft. Die Antriebsrolle wird von einem permanent erregten hochpoligen Synchronmotor angetrieben, der bei vergleichsweise niedriger Nenndrehzahl ein sehr hohes Drehmoment abgibt.

Das Dokument CN 103 950 702 B beschreibt ein Steuerverfahren für eine Energieerzeugungsvorrichtung zur Versorgung einer Gurtfördervorrichtung für den Transport von mineralischen Schüttgütern.

Deshalb ist es Aufgabe der Erfindung, die Belastung des Gurtes bei einem Stromausfall zu reduzieren.

Diese Aufgabe wird durch eine Gurtfördereinrichtung nach Anspruch 1 gelöst. Darüber hinaus wird diese Aufgabe durch ein Verfahren zum Anhalten einer Gurtantriebsrolle gemäß Anspruch 8 gelöst.

Vorteilhafte Ausgestaltungen und Weiterentwicklungen der Erfindung sind Gegenstand der abhängigen Ansprüche.

Der Erfindung liegt die Erkenntnis zu Grunde, dass insbesondere bei einer direktangetriebenen Gurtfördereinrichtung, die Trägheit von Schüttgut auf dem Gurt bei einem Stromausfall den Gurt durch eine bereichsweise Stauchung belastet. Insbesondere bei konventionell angetriebenen Gurtfördereinrichtungen erfolgt bei einem Stromausfall ein langsames Austrudeln des Antriebs und der Gurtantriebsrolle. Das langsame Austrudeln des Antriebs erfolgt aufgrund des hohen Trägheitsmoments des Antriebs durch das Getriebe. Das Austrudeln des Antriebs ohne ein Getriebe erfolgt deutlich schneller, da das Trägheitsmoment des Antriebs geringer ist.

Um einen Ausgleich des Trägheitsmoments zu erreichen, wird die Drehbewegung des Motors noch für eine Stopp-Zeit aufrecht erhalten. Während der Stopp-Zeit erfolgt die Bereitstellung der elektrischen Energie für den Motor aus einem Energiespeicher. Vorzugsweise ist der Energiespeicher als Zwischenkreis-Energiespeicher, insbesondere als Zwischenkreiskondensator oder als wiederaufladbare Batterie, ausgebildet.

Vorteilhaft erfolgt ein Anhalten des Motors und damit der Gurtantriebsrolle auf Grundlage einer Kennlinie, wobei die Kennlinie Sollwerte für die Drehzahl des Motors als Funktion der Zeit bereitstellt.

Vorteilhaft wird kinetische Energie, welche beim Anhalten des Motors frei wird, durch einen Energiespeicher bereitgestellt. Der Energiespeicher wird vorzugsweise während des Betriebes der Gurtfördereinrichtung aufgeladen. Vorteilhaft dient demnach die Regelung der Drehzahl in Verbindung mit dem Energiespeicher zur langsamen Reduktion der Drehzahl des Motors. Demnach dient die Regelung zum Ausgleich der Reibungsverluste, so dass der Motor seine Drehzahl innerhalb der vorgegeben Stopp-Zeit zum Stillstand hin reduziert.

Vorzugsweise findet als Energiespeicher ein Schwungrad Anwendung, welches mit einem Elektromotor gekoppelt ist. Vorteilhaft kann auch ein entsprechend der Energieaufnahme ausgelegter Elektromotor ohne zusätzliches Schwungrad als Energiespeicher dienen. Der Elektromotor ist vorzugsweise über einen Frequenzumrichter mit dem Zwischenkreis der Stromversorgung des Motors verbunden, wobei der Motor zum Antrieb der Gurtfördereinrichtung ausgebildet ist.

Die Gurtfördereinrichtung ist insbesondere eine direkt angetriebene Gurtfördereinrichtung. Die Gurtfördereinrichtung weist zumindest eine Gurtantriebsrolle und einen Antrieb auf, wobei der Antrieb einen Motor umfasst, wobei dem Motor ein Energiespeicher zugeordnet ist, wobei der Motor zum Antrieb der Gurtantriebsrolle vorgesehen ist, wobei die Gurtfördereinrichtung dazu ausgebildet ist, nach einem Ereignis, einem Stromausfall, elektrische Energie aus dem Energiespeicher bereitzustellen, um die Drehzahl des Motors innerhalb einer Stopp-Zeit zum Stillstand hin zu verzögern. Eine direkt angetriebene Gurtfördereinrichtung weist in der Regel kein Getriebe zwischen dem Motor und der Gurtantriebsrolle auf. Der Motor ist vorzugsweise ein Synchronmotor. Vorzugsweise weist der Motor Permanentmagnete auf. Alternativ kann der Motor auch fremderregt, das heißt mit stromdurchflossenen Spulen, ausgebildet sein.

Der Motor wird vorteilhaft während des Betriebes der Gurtfördereinrichtung von einer Stromversorgung mit elektrischer Energie versorgt. Die Stromversorgung kann als Frequenzumrichter mit einem Zwischenkreis ausgeführt sein.

Bevorzugt ist der Energiespeicher der Stromversorgung zugeordnet. Der Energiespeicher ist vorzugsweise in den Zwischenkreis des Frequenzumrichters integriert. Vorzugsweise ist der Energiespeicher als Kondensatoren-Einheit, als aufladbare Batterie oder als Schwungrad mit Motor ausgebildet.

Die Stopp-Zeit hängt
- von der Ausrichtung der Gurtfördereinrichtung;
- von einer Vorspannung des Gurtes;
- von der Beladung der Gurtfördereinrichtung;
- von den Reibungsverlusten der Gurtfördereinrichtung und/oder
- von dem Drehmoment der Gurtantriebsrolle ab.

Vorzugsweise wird eine geeignete Stopp-Zeit durch eine Simulation des Gurtförderers ermittelt.

Erfindungsgemäß ist das Ereignis ein Stromausfall.

Bei Eintreten des Ereignisses wird dem Motor vorteilhaft elektrische Energie aus dem Zwischenkreis des Frequenzumrichters bereitgestellt. Mit Hilfe der elektrischen Energie kann der Motor zumindest noch in der Stopp-Zeit betrieben werden.

Erfindungsgemäß ist dem Motor eine Regeleinrichtung für die Drehzahl zugeordnet. Bei einem Ereignis dient die Regeleinrichtung zur Zuführung der elektrischen Energie zum Motor dergestalt, dass der Motor anhand einer Kennlinie verzögert wird.

Vorzugsweise ist eine solche Regeleinrichtung derart ausgebildet, dass die Stopp-Zeit gemäß der elektrischen Energie, die im Energiespeicher gespeichert ist, variiert werden kann. Durch die Erfindung kann eine Belastung des Gurtes durch ein rasches Anhalten der Gurtantriebsrolle nach einem unvorhergesehenen Ereignis vermindert werden. Insbesondere eine stark unterschiedliche Gurtspannung in verschiedenen Bereichen des Gurtes, und daraus resultierend gegebenenfalls ein Falten des Gurtes, kann durch die Erfindung wirksam verhindert werden.

Bei einer vorteilhaften Ausgestaltung der Erfindung erfolgt das Verzögern des Motors anhand einer Kennlinie, wobei die Kennlinie den Verlauf eines Soll-Wertes der Drehzahl des Motors als Funktion der Zeit vorgibt.

Alternativ oder zusätzlich können weitere Kennlinien für unterschiedliche Beladungszustände der Gurtfördereinrichtung bestimmt und hinterlegt werden.

Die Kennlinie ist vorzugsweise dem Motor, einer Stromversorgung oder einer Drehzahlregelung für den Motor zugeordnet. Vorzugsweise ist die Kennlinie durch eine Versuchsreihe ermittelbar.

Ein vorteilhaftes Verfahren zur Ermittlung der Kennlinie kann wie folgt aussehen:
- Bestimmung der Gurtspannung im Stillstand und während des Betriebes. Vorzugsweise kann die eine maximale Gurtspannung beim Beschleunigen von Schüttgut bestimmt werden, wenn der Gurt der Gurtfördereinrichtung nur bereichsweise mit Schüttgut beaufschlagt ist;
- Optional kann auch eine maximale Abweichung der Gurtspannung in Bezug zur Position der Gurtfördereinrichtung bestimmt werden;
- Berechnung der minimalen Stopp-Zeit, um bei einem bereichsweise beladenen Gurt die Differenz von Gurtspannungen an unterschiedlichen Positionen unter einer maximal zulässigen Differenz zu halten.

Durch die Kennlinie kann für eine vorgegebene Beladung des Gurtes sichergestellt werden, dass kein Falten des Gurtes erfolgt. Durch die Verzögerung der Drehzahl des Motors anhand der Kennlinie kann die Belastung des Gurtes auf ein Minimum reduziert werden.

Bei einer weiteren vorteilhaften Ausgestaltung der Erfindung gibt die Kennlinie eine lineare Abnahme der Drehzahl vor.

Vorzugsweise erfolgt die Verzögerung der Drehzahl des Motors linear. Durch eine lineare Verzögerung der Drehzahl des Motors wird der Gurt besonders geschont.

Bei einer weiteren vorteilhaften Ausgestaltung der Erfindung dauert die Stopp-Zeit zwischen 10 und 150 Sekunden, insbesondere zwischen 30 und 90 Sekunden.

Die Stopp-Zeit ist vorzugsweise die Zeitdauer, welche der Motor oder die Gurtantriebsrolle benötigt, um ausgehend von der Ausgangsdrehzahl zum Stillstand zu gelangen.

Vorzugsweise wird eine Mehrzahl von Stopp-Zeiten für unterschiedliche Beladungszustände der Gurtfördereinrichtung ermittelt und/oder hinterlegt. Je nach Beladungszustand kann die Regeleinrichtung eine geeignete Stopp-Zeit auswählen.

Die Stopp-Zeit wird vorzugsweise in Abhängigkeit von der Beladung des Gurtes mit Schüttgut und/oder einer Vorspannung des Gurtes festgelegt.

In der Regel gilt, je länger die Stopp-Zeit ist, desto schonender ist ein Halten für den Gurt. Demgegenüber ist für eine lange Stopp-Zeit ein größerer Energiespeicher vorteilhaft. Demnach ist eine experimentelle Ermittlung der Stopp-Zeit vorteilhaft, um unterschiedliche Beladungszustände des Gurtes bzw. der Gurtfördereinrichtung angemessen zu berücksichtigen.

Erfindungsgemäß weist die Gurtfördereinrichtung eine Regeleinrichtung für die Drehzahl des Motors auf, wobei die Regelung anhand von Sollwerten, insbesondere der Kennlinie, die Drehzahl des Motors regelt.

Die Regeleinrichtung ist vorzugsweise als PID-Regelung ausgebildet. Die Regeleinrichtung dient zur Regelung der Drehzahl des Motors. Als Sollwert für die Regelung werden dem Regler vorteilhaft Drehzahlwerte aus der Kennlinie bereitgestellt.

Die Regeleinrichtung ist vorzugsweise als Spannungsregelung für eine Zwischenkreisspannung in einem Frequenzumrichter ausgebildet. Vorzugsweise wird hierbei auf eine bereits vorhandene Regeleinrichtung zurückgegriffen und diese entsprechend modifiziert.

Durch eine Regelung der Drehzahl erfolgt vorzugsweise eine besonders genaue Verzögerung der Drehzahl der Gurtantriebsrolle. Durch die genaue Regelung der Drehzahl über die Stopp-Zeit wird der Gurt vorteilhaft geschont. Vorzugsweise ist die Regeleinrichtung in einem Frequenzumrichter, der zur Stromversorgung des Motors ausgebildet ist, integriert.

In einer weiteren vorteilhaften Ausgestaltung der Erfindung weist die Gurtfördereinrichtung eine Stromversorgung für den Motor auf, wobei die Stromversorgung als Frequenzumrichter ausgebildet ist und der Energiespeicher als Zwischenkreis-Energiespeicher ausgebildet ist.

Der Energiespeicher ist vorzugsweise als wiederaufladbare Batterie, als Kondensatoren-Einheit oder als sonstiger elektrischer Energiespeicher ausgebildet. Alternativ oder zusätzlich kann der Energiespeicher auch als Schwungrad-Energiespeicher ausgebildet sein. Ein Elektromotor, der mit dem Schwungrad gekoppelt ist, wirkt als Antrieb für das Schwungrad und/oder als Generator, um die kinetische Energie aus dem rotierenden Schwungrad an dem Zwischenkreis zurück zu übertragen.

Durch die Integration des Energiespeichers in den Zwischenkreis kann vorteilhaft ein bereits bestehender Frequenzumrichter einfach erweitert werden.

Der Einsatz eines Schwungrad-basierten Energiespeichers ist günstig in der Anschaffung und im laufenden Betrieb. Insbesondere können handelsübliche Schwungrad-basierte Energiespeicher sehr viel elektrische Energie speichern und sind daher für den Einsatz im Bergbau oder bei Anwendungen im Rahmen der Schwerindustrie besonders gut geeignet.

In einer weiteren vorteilhaften Ausgestaltung der Erfindung weist die Gurtfördereinrichtung eine Freilaufkupplung auf, wobei die Freilaufkupplung zwischen dem Motor und der Gurtantriebsrolle positioniert ist, wobei die Freilaufkupplung dazu ausgebildet ist, bei einer höheren Drehzahl der Gurtantriebsrolle als die Drehzahl des Motors die Verbindung zum Motor auszukuppeln.

Unter "auskuppeln" wird die Trennung der Welle des Motors mit der Gurtantriebsrolle verstanden.

Eine Freilaufkupplung ist vorzugsweise in der Verbindung, z.B. einer Welle, zwischen dem Motor und der Gurtantriebsrolle angeordnet. Bei einer höheren Drehzahl der Gurtantriebsrolle als der Drehzahl des Motors kuppelt die Freilaufkupplung die Gurtantriebsrolle von dem Motor ab/aus. Weist der Motor wiederum eine höhere Drehzahl als die Gurtantriebsrolle auf, so kuppelt die Freilaufkupplung die Gurtantriebsrolle mit dem Motor zusammen und erzeugt so wieder eine drehfeste Verbindung.

Durch die Freilaufkupplung kann das Trägheitsmoment des Antriebs auf das Trägheitsmoment der Gurtantriebsrolle reduziert werden. Durch das sehr geringe Trägheitsmoment ist einer Belastung des Gurtes vorteilhaft vermindert, da der Motor nicht mehr durch sein Trägheitsmoment der Bewegung des Gurtes entgegenwirkt. Somit wirkt bei einem Anhalten des Motors eine nur geringe Gegenkraft. Durch die geringe Gegenkraft werden Abweichungen in der Gurtspannung erheblich reduziert und der Gurt somit geschont.

Bei dem Verfahren zum Anhalten einer Gurtantriebsrolle einer Gurtfördereinrichtung wird, bei Vorliegen eines unvorhergesehenen Ereignisses, eines Stromausfalls, innerhalb einer Stopp-Zeit die Drehzahl des Motors zum Stillstand hin verzögert.

Die Gurtfördereinrichtung für das Verfahren weist in der Regel einen Motor, der mit der Gurtantriebsrolle verbunden ist, auf.

Bei dem Verfahren wird der Motor, während der Verzögerung zum Stillstand, von einem Energiespeicher mit elektrischer Energie versorgt. Die Drehzahl des Motors ist mit Hilfe einer Regeleinrichtung geregelt.

Die Regeleinrichtung verzögert den Motor anhand von vorgegebenen oder vorgebbaren Soll-Werten für die Drehzahl.

Die Regeleinrichtung dient zur Regelung der Zufuhr von elektrischer Energie aus einem Energiespeicher an den Motor. Anhand der zugeführten elektrischen Energie kann der Motor die Gurtantriebsrolle noch für die Dauer der Stopp-Zeit weiter antreiben.

Durch das verzögerte Anhalten der Gurtantriebsrolle kann ein schnelles Anhalten des Antriebs aufgrund eines geringen Trägheitsmoments und somit einer Belastung des Gurtes, wirksam vermieden werden.

In einer weiteren vorteilhaften Ausgestaltung der Erfindung ist dem Motor eine Stromversorgung, insbesondere ein Frequenzumrichter mit einem Zwischenkreis, zugeordnet, wobei der Energiespeicher dem Zwischenkreis zugeordnet ist, wobei die Verzögerung der Drehzahl des Motors mit Hilfe einer Regeleinrichtung für eine Spannung im Zwischenkreis erfolgt. Vorzugsweise lässt sich die Drehzahl eines Antriebs sehr einfach durch die Spannung im Zwischenkreis steuern oder regeln. Der Zwischenkreis ist vorzugsweise der Zwischenkreis desjenigen Frequenzumrichters, der den Motor der Gurtfördereinrichtung mit elektrischer Energie versorgt.

Der Energiespeicher ist vorzugsweise dem Zwischenkreis zugeordnet. Vorzugsweise erfolgt eine Absenkung der Drehzahl des Motors durch eine Absenkung der Spannung im Zwischenkreis. Zur Aufrechterhaltung der Spannung im Zwischenkreis ist dem Zwischenkreis vorzugsweise der Energiespeicher zugeordnet.

Durch die Regelung der Drehzahl des Motors durch die Regelung der Spannung des Zwischenkreises ist eine besonders einfache Regelung der Drehzahl des Motors möglich. Durch die einfache Regelung der Drehzahl ist eine besonders genaue Einstellung der Stopp-Zeit möglich.

Bei einer weiteren vorteilhaften Ausgestaltung der Erfindung erfolgt die Verzögerung des Motors anhand einer Kennlinie.

Unter der Verzögerung des Motors wird eine Reduktion der Drehzahl des Motors verstanden.

Eine Kennlinie stellt vorzugsweise den zeitlichen Verlauf der Soll-Drehzahl des Motors bis zur Stopp-Zeit bereit. Die Kennlinie stellt vorzugsweise Soll-Werte für die Regeleinrichtung bereit. Die Kennlinie wird vorzugsweise der Regeleinrichtung bereitgestellt. Zur Bereitstellung von Ist-Werten der Drehzahl für die Regeleinrichtung dient vorzugsweise ein Geber oder eine Bestimmung der Ist-Drehzahl durch eine Messung der Motor-Spannung und/oder des Motorstroms mit Hilfe des Frequenzumrichters.

Bei einer Regelung der Drehzahl des Motors durch die Regelung der bereitgestellten Energie oder der Regelung der Spannung in dem Zwischenkreis, kann die Kennlinie auch als zeitlicher Verlauf der dem Motor zugeführten, elektrischen Energie oder dem zeitlichen Verlauf der Spannung im Zwischenkreis entsprechen.

Im Folgenden wird die Erfindung anhand von Figuren näher beschrieben und erläutert. Die in den Figuren gezeigten Ausführungen sind lediglich beispielhaft und schränken die Erfindung keinesfalls ein.

Es zeigen:
- FIG 1: eine beispielhafte Gurtfördereinrichtung,
- FIG 2: eine beispielhafte Kennlinie sowie
- FIG 3: eine weitere beispielhafte Gurtfördereinrichtung mit einer Freilaufkupplung.

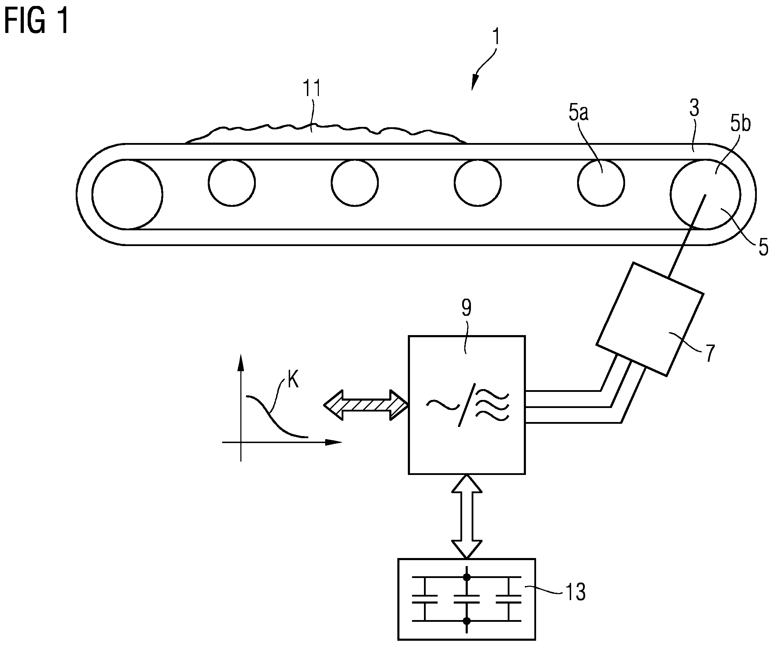

FIG 1 zeigt eine beispielhafte Gurtfördereinrichtung 1. Die Gurtfördereinrichtung umfasst einen Gurt 3 zum Transport von Schüttgut 11. Der Gurt 3 wird auf beiden Seiten von jeweils einer Gurtantriebsrolle 5 gehalten. Durch die Gurtantriebsrollen 5 wird der Gurt 3 auf eine festlegbare Gurtzugspannung gespannt. Die Gurtantriebstrollen 5 sind an der jeweiligen Seite positioniert. Der Gurt 3 wird weiter von Gurtantriebsrollen unterstützt, die als Tragrollen 5a ausgebildet sind. Die an der jeweiligen Seite angeordnete Gurtantriebsrolle 5 wird auch als Gurttrommel 5a bezeichnet. Die zwischen den sogenannten Gurttrommeln 5a positionierten Gurtantriebsrollen 5 werden auch als Tragrollen 5b bezeichnet.

Zumindest eine der Gurtantriebsrollen 5 ist mit einem Motor 7 gekoppelt. Der Motor 7 dient zum Antrieb der jeweiligen Gurtantriebsrolle 5 und damit zum Antrieb des Gurtes 3 der Gurtfördereinrichtung 1. Der Motor 7 ist mit einer Stromversorgung 9 verbunden. Die Stromversorgung 9 ist vorzugsweise als Frequenzumrichter ausgebildet.

Die Stromversorgung ist mit einem Energiespeicher 13 verbunden. Der Energiespeicher 13 ist/wird während des Betriebes des Gurtförderers 1 mit elektrischer Energie geladen. Die Kapazität des Energiespeichers 13 ist vorzugsweise so groß gewählt, dass der Motor 7 den Gurt 3 noch während einer Stopp-Zeit t_S kontrolliert, insbesondere gemäß einer Kennlinie K, zum Stillstand bringen kann. Vorteilhaft ist die Kapazität des Energiespeichers 13 so gewählt, dass ein Weiterbetrieb des Motors 7 für eine Stoppzeit t_S mit einer reduzierten Drehzahl möglich ist.

Der Energiespeicher 13 ist vorzugsweise als Zwischenkreiskondensator, als (freilaufender) Motor mit einem eigenen Frequenzumrichter oder als Akku ausgebildet.

Bei einem Ereignis E, einem Stromausfall, wird der Motor von der elektrischen Energie aus dem Energiespeicher 13 versorgt. Wenn Energie aus dem Energiespeicher entnommen wird, wird der Motor entlang einer Kennlinie K langsam abgebremst, d.h. in den Stillstand überführt.

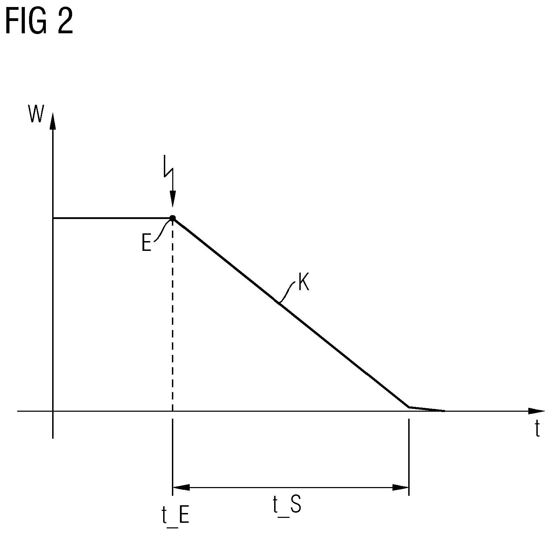

FIG 2 zeigt eine beispielhafte Kennlinie K. Die Kennlinie K gibt Soll-Werte einer Drehzahl w des Motors 7 als Funktion der Zeit t vor. Anhand der Kennlinie K werden Soll-Werte der Drehzahl w des Motors 7 für eine Drehzahl-Regeleinrichtung bereitgestellt. Die Regeleinrichtung stellt Soll-Drehzahlen in Abhängigkeit der Zeit t der Stromversorgung 9 des Motors 7 bereit. Erfindungsgemäß wird der Motor innerhalb der Stopp-Zeit t _S zum Stillstand hin verzögert.

Gemäß der Kennlinie K erfolgt nach einem Ereignis E, einem Stromausfall, ein langsames Abbremsen des Motors 7. Die benötigte elektrische Energie, die für das langsame Abbremsen des Motors 7 benötigt wird, wird dem Energiespeicher 13 entnommen. Durch die Energie des Energiespeichers 13 kann der Motor 7 innerhalb einer Stopp-Zeit t_S zum Stillstand hin abgebremst werden. Die Stopp-Zeit t_S wird vorzugsweise experimentell für die jeweilige Gurtfördereinrichtung 1 ermittelt. Alternativ oder zusätzlich wird die Stopp-Zeit mit Hilfe einer Simulation der Gurtfördereinrichtung 1 bestimmt. Für eine handelsübliche Gurtfördereinrichtung 1 wurde eine vorteilhafte Stopp-Zeit t S von 30 ± 20 Sekunden ermittelt.

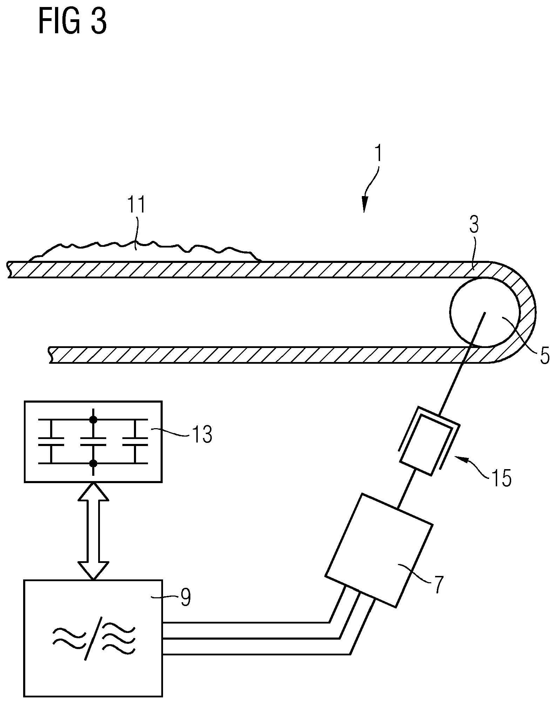

FIG 3 zeigt eine weitere beispielhafte Gurtfördereinrichtung 1 mit einer Freilaufkupplung 15. Die weitere beispielhafte Gurtfördereinrichtung entspricht im Wesentlichen der beispielhaften Gurtfördereinrichtung gemäß der FIG 1. Die Freilaufkupplung 15 trennt die drehfeste Verbindung vom Motor 7 zur Antriebsrolle 5, insofern der Motor 7 eine geringere Drehzahl w als die Antriebsrolle 5 hat. Zusammenfassend betrifft die Erfindung eine Gurtfördereinrichtung 1 sowie ein Verfahren zum kontrollierten Anhalten einer Gurtfördereinrichtung 1. Insbesondere für direkt angetriebene Gurtfördereinrichtungen 1 kann ein Ereignis E, als ein Stromausfall, zu einem schnellen Stillstand einer Gurtantriebsrolle 5 führen. Ein schneller Stillstand der Gurtantriebsrolle 5 führt lokal zu einer Abnahme der Gurtspannung des Gurtes 3. Durch die lokale Abnahme der Gurtspannung kann eine Stauchung des Gurtes 3 oder gar ein Falten des Gurtes den Gurt 3 beschädigen. Um eine Beschädigung des Gurtes zu verhindern, schlägt die Erfindung vor, bei dem Ereignis E den Motor 7 langsam zum Stillstand abzubremsen. Die Energie für das langsame Abbremsen wird vorzugsweise einem Energiespeicher 13 entnommen, wobei der Energiespeicher 13 einer Stromversorgung 9 für den Motor 7 zugeordnet ist. Vorzugsweise erfolgt das Abbremsen gemäß einer Kennlinie K, wobei die Kennlinie die Drehzahl w des Motors 7 als Funktion der Zeit t angibt.

## Patentansprüche

1. Gurtfördereinrichtung (1), insbesondere direkt angetriebene Gurtfördereinrichtung (1), aufweisend zumindest eine Gurtantriebsrolle (5) und einen Antrieb, wobei der Antrieb einen Motor (7) umfasst, wobei der Motor (7) zum Antrieb der Gurtantriebsrolle (5) vorgesehen ist, **dadurch gekennzeichnet, dass** dem Motor (7) ein zur elektrischen Versorgung des Motors (7) während einer Stopp-Zeit (t_S) eingerichteter Energiespeicher (13) zugeordnet ist, wobei die Gurtfördereinrichtung (1) dazu ausgebildet ist, nach einem Ereignis (E), einem Stromausfall, elektrische Energie (E-el) aus dem Energiespeicher (13) für die elektrische Versorgung des Motors (7) bereitzustellen, um für ein verzögertes Anhalten der Gurtantriebsrolle die Drehzahl (w) des Motors (7) innerhalb der Stopp-Zeit (t_S) zum Stillstand hin zu verzögern, wobei die Gurtfördereinrichtung weiter eine Regeleinrichtung für die Drehzahl (w) des Motors (7) aufweist, wobei die Regeleinrichtung derart ausgebildet ist anhand von Sollwerten die Drehzahl des Motors (7) zu regeln und anhand von vorgegebenen oder vorgebbaren Soll-Werten für die Drehzahl den Motor zu verzögern, wobei die Regeleinrichtung zur Regelung der Zufuhr von elektrischer Energie aus dem Energiespeicher (13) an den Motor (7) ausgebildet ist, wobei der Motor ausgebildet ist anhand der zugeführten elektrischen Energie die Gurtantriebsrolle noch für die Dauer der Stopp-Zeit weiter anzutreiben.

2. Gurtfördereinrichtung (1) nach Anspruch 1, **dadurch gekennzeichnet, dass** der Energiespeicher (13) einen Kondensator und/oder eine aufladbare Batterie und/oder einen optional mit einem Schwungrad gekoppelten Elektromotor umfasst.

3. Gurtfördereinrichtung (1) nach einem der vorhergehenden Ansprüche, wobei das Verzögern des Motors (7) anhand einer Kennlinie (K) erfolgt, wobei die Kennlinie (K) den Verlauf eines Soll-Wertes der Drehzahl (w) des Motors (7) als Funktion der Zeit (t) vorgibt.

4. Gurtfördereinrichtung (1) nach Anspruch 3, wobei die Kennlinie (K) eine lineare Abnahme der Drehzahl (w) vorgibt.

5. Gurtfördereinrichtung (1) nach einem der vorangehenden Ansprüche, wobei die Stopp-Zeit (t_S) zwischen 5 und 150 Sekunden, insbesondere zwischen 30 und 90 Sekunden, dauert.

6. Gurtfördereinrichtung (1) nach einem der vorangehenden Ansprüche, weiter aufweisend eine Stromversorgung für den Motor (7), wobei die Stromversorgung als Frequenzumrichter ausgebildet ist und der Energiespeicher (13) als Zwischenkreis-Energiespeicher, ausgebildet ist.

7. Gurtfördereinrichtung (1) nach einem der vorangehenden Ansprüche, weiter aufweisend eine Freilaufkupplung (15), wobei die Freilaufkupplung (15) zwischen dem Motor (7) und der Gurtantriebsrolle (5) positioniert ist, wobei die Freilaufkupplung dazu ausgebildet ist, bei einer höheren Drehzahl der Gurtantriebsrolle (5) als die Drehzahl des Motors (7), die Verbindung zum Motor (7) auszukuppeln.

8. Verfahren zum Anhalten einer Gurtantriebsrolle (5) einer Gurtfördereinrichtung (1) nach einem der vorhergehenden Ansprüche, wobei der Motor (7), der mit der Gurtantriebsrolle (5) verbunden ist, bei Vorliegen des Ereignisses (E), dem Stromausfall, innerhalb der Stopp-Zeit (t_S) die Drehzahl (w) des Motors (7) zum Stillstand hin verzögert wird, wobei die elektrische Energie zur Versorgung des Motors (7) während der Stopp-Zeit (t_S) aus dem Energiespeicher (13) bereitgestellt wird, wobei die Gurtantriebsrolle verzögert angehalten wird, wobei die Regelung anhand von vorgegebenen oder vorgebbaren Sollwerten die Drehzahl des Motors (7) regelt, wobei die Regeleinrichtung zur Regelung der Zufuhr von elektrischer Energie aus dem Energiespeicher an den Motor dient, wobei anhand der zugeführten elektrischen Energie der Motor die Gurtantriebsrolle noch für die Dauer der Stopp-Zeit weiter antreibt, wobei die Regeleinrichtung den Motor anhand von vorgegebenen oder vorgebbaren Soll-Werten für die Drehzahl verzögert.

9. Verfahren nach Anspruch 8, wobei dem Motor eine Stromversorgung (9), insbesondere ein Frequenzumrichter mit einem Zwischenkreis, zugeordnet ist, wobei der Energiespeicher dem Zwischenkreis zugeordnet ist, wobei die Verzögerung der Drehzahl (w) des Motors (7) mit Hilfe einer Regeleinrichtung für eine Spannung im Zwischenkreis erfolgt.

10. Verfahren nach einem der Ansprüche 8 oder 9, wobei die Verzögerung des Motors (7) anhand einer Kennlinie (K) erfolgt.

## Claims

1. Belt conveyor device (1), in particular directly driven belt conveyor device (1), having at least one belt driving roller (5) and a drive, wherein the drive comprises a motor (7), wherein the motor (7) is provided for driving the belt driving roller (5), **characterised in that** an energy accumulator (13) configured to supply electricity to the motor (7) during a stopping time (t_S) is associated with the motor (7), wherein the belt conveyor device (1) is embodied to provide electrical energy (E-el) from the energy accumulator (13) to supply electricity to the motor (7) in order to effect a retarded stoppage of the belt driving roller by retarding the rotational speed (w) of the motor (7) to a standstill within the stopping time (t_S) following an event (E), a power failure, wherein the belt conveyor device further comprises a control device for the rotational speed (w) of the motor (7), wherein the control device is designed to control the rotational speed of the motor (7) on the basis of setpoint values and to decelerate the motor on the basis of predetermined or predeterminable setpoint values for the rotational speed, wherein the control device is designed to control the supply of electrical energy from the energy accumulator (13) to the motor (7), wherein the motor is designed to continue to drive the belt driving roller for the duration of the stopping time on the basis of the supplied electrical energy.

2. Belt conveyor device (1) according to claim 1, **characterised in that** the energy accumulator (13) comprises a capacitor and/or a rechargeable battery and/or an electric motor optionally coupled to a flywheel.

3. Belt conveyor device (1) according to one of the preceding claims, wherein the retardation of the motor (7) takes place according to a characteristic curve (K), wherein the characteristic curve (K) specifies the course of a setpoint value of the rotational speed (w) of the motor (7) as a function of the time (t).

4. Belt conveyor device (1) according to claim 3, wherein the characteristic curve (K) specifies a linear reduction of the rotational speed (w).

5. Belt conveyor device (1) according to one of the preceding claims, wherein the stopping time (t_S) has a duration of between 5 and 150 seconds, in particular between 30 and 90 seconds.

6. Belt conveyor device (1) according to one of the preceding claims, further comprising a power supply for the motor (7), wherein the power supply is embodied as a frequency converter and the energy accumulator (13) is embodied as an intermediate circuit energy accumulator.

7. Belt conveyor device (1) according to one of the preceding claims, further having a free-wheeling clutch (15), wherein the free-wheeling clutch (15) is positioned between the motor (7) and the belt driving roller (5), wherein the free-wheeling clutch is embodied to decouple the connection to the motor (7) if the rotational speed of the belt driving roller (5) is higher than the rotational speed of the motor (7).

8. Method for stopping a belt driving roller (5) of a belt conveyor device (1) according to one of the preceding claims, wherein the rotational speed (w) of the motor (7), which is connected to the belt driving roller (5), is retarded to a standstill within the stopping time (t_S) upon occurrence of the event (E), the power failure, wherein the electrical energy for supplying the motor (7) during the stopping time (t_S) is provided from the energy accumulator (13), wherein the belt driving roller is stopped in a retarded manner, wherein the control regulates the rotational speed of the motor (7) on the basis of predetermined or predeterminable setpoint values, wherein the control device serves to regulate the supply of electrical energy from the energy accumulator to the motor, wherein the motor continues to drive the belt driving roller for the duration of the stopping time on the basis of the supplied electrical energy, wherein the control device decelerates the motor on the basis of predetermined or predeterminable setpoint values for the rotational speed.

9. Method according to claim 8, wherein the motor is associated with a power supply (9), in particular a frequency converter with an intermediate circuit, wherein the energy accumulator is associated with the intermediate circuit, wherein the retardation of the rotational speed (w) of the motor (7) takes place with the aid of a regulating device for a voltage in the intermediate circuit.

10. Method according to one of claims 8 or 9, wherein the retardation of the motor (7) takes place according to a characteristic curve (K).

## Revendications

1. Dispositif (1) de transport à courroie, en particulier dispositif (1) de transport à courroie entraîné directement, comportant au moins un rouleau (5) de l'entraînement à courroie et un entraînement, dans lequel l'entraînement comprend un moteur (7), dans lequel le moteur (7) est prévu pour l'entraînement du rouleau (5) de l'entraînement à courroie, **caractérisé en ce qu'**au moteur (7) est associé un accumulateur (13) d'énergie conçu pour l'alimentation électrique du moteur (7) pendant un temps (t_S) d'arrêt, dans lequel le dispositif (1) de transport à courroie est constitué pour, après un événement (E), une panne de courant, mettre à disposition de l'énergie (E-el) électrique de l'accumulateur (13) d'énergie pour l'alimentation électrique du moteur (7), afin de ralentir jusqu'à l'arrêt, pour un arrêt retardé du rouleau de l'entraînement à courroie, la vitesse (w) de rotation du moteur (7) dans le temps (t_S) d'arrêt, dans lequel le dispositif de transport à courroie comporte également un dispositif de régulation pour la vitesse (w) de rotation du moteur (7), dans lequel le dispositif de régulation est conçu pour réguler la vitesse de rotation du moteur (7) sur la base de valeurs de consigne et pour ralentir le moteur sur la base de valeurs de consigne prédéterminées ou pouvant être prédéfinies pour la vitesse de rotation, dans lequel le dispositif de régulation est conçu pour réguler l'alimentation en énergie électrique à partir de l'accumulateur (13) d'énergie vers le moteur (7), dans lequel le moteur est conçu pour continuer à entraîner le rouleau de l'entraînement à courroie pendant la durée du temps d'arrêt au moyen de l'énergie électrique fournie.

2. Dispositif (1) de transport à courroie selon la revendication 1, **caractérisé en ce que** l'accumulateur (13) d'énergie comprend un condensateur et/ou une batterie rechargeable et/ou un moteur électrique couplé éventuellement à un volant.

3. Dispositif (1) de transport à courroie selon l'une quelconque des revendications précédentes, dans lequel le ralentissement du moteur (7) s'effectue au moyen d'une ligne (K) caractéristique, dans lequel la ligne (K) caractéristique prescrivant la courbe d'une valeur de consigne de la vitesse (w) de rotation du moteur (7) en fonction du temps (t).

4. Dispositif (1) de transport à courroie selon la revendication 3, dans lequel la ligne (K) caractéristique prescrit une décroissance linéaire de la vitesse (w) de rotation.

5. Dispositif (1) de transport à courroie selon l'une quelconque des revendications précédentes, dans lequel le temps (t_S) d'arrêt dure entre 5 et 150 secondes, notamment entre 30 et 90 secondes.

6. Dispositif (1) de transport à courroie selon l'une des revendications précédentes, comprenant en outre une alimentation en courant du moteur (7), dans lequel l'alimentation en courant est conçue sous la forme d'un convertisseur de fréquence et l'accumulateur (13) est conçu sous la forme d'un accumulateur d'énergie à circuit intermédiaire.

7. Dispositif (1) de transport à courroie selon l'une quelconque des revendications précédentes, comprenant en outre un accouplement (15) à roue libre, dans lequel l'accouplement (15) à roue libre étant placé entre le moteur (7) et le rouleau (5) de l'entraînement à courroie, dans lequel l'accouplement à roue libre est constitué de manière à découpler la liaison au moteur (7), si la vitesse de rotation du rouleau (5) de l'entraînement à courroie est plus grande que la vitesse de rotation du moteur (7).

8. Procédé d'arrêt d'un rouleau (5) d'un entraînement à courroie d'un dispositif (1) de transport à courroie selon l'une des revendications précédentes, dans lequel le moteur (7) est relié au rouleau (5) de l'entraînement à courroie, dans lequel, en présence de l'évènement (E), la panne de courant, on ralentit dans le temps (t_S) d'arrêt la vitesse (w) de rotation du moteur (7) jusqu'à l'arrêt, dans lequel on met l'énergie électrique d'alimentation du moteur (7) à disposition pendant le temps (t_S) d'arrêt à partir de l'accumulateur (13) d'énergie, dans lequel on arrête de manière retardée le rouleau de l'entraînement à courroie, dans lequel la régulation régule la vitesse de rotation du moteur (7) sur la base de valeurs de consigne prédéterminées ou pouvant être prédéfinies, dans lequel le dispositif de régulation sert à réguler l'alimentation en énergie électrique à partir de l'accumulateur d'énergie vers le moteur, dans lequel le moteur continue d'entraîner le rouleau de l'entraînement à courroie pendant la durée du temps d'arrêt au moyen de l'énergie électrique fournie, dans lequel le dispositif de régulation ralentit le moteur sur la base de valeurs de consigne prédéterminées ou pouvant être prédéfinies pour la vitesse de rotation.

9. Procédé selon la revendication 8, dans lequel on associe au moteur une alimentation (9) en courant, notamment un convertisseur de fréquence ayant un circuit intermédiaire, dans lequel l'accumulateur d'énergie est associé au circuit intermédiaire, dans lequel le ralentissement de la vitesse (w) de rotation du moteur (7) s'effectue au moyen d'un dispositif de régulation d'une tension dans le circuit intermédiaire.

10. Procédé selon l'une quelconque des revendications 8 ou 9, dans lequel le ralentissement du moteur (7) s'effectue au moyen d'une ligne (K) caractéristique.
